Europäisches Patentamt

European Patent Office

Office européen des brevets

(11) Veröffentlichungsnummer : **0 093 821**
**B1**

(12) **EUROPÄISCHE PATENTSCHRIFT**

(45) Veröffentlichungstag der Patentschrift :
06.05.87

(21) Anmeldenummer : **82810308.5**

(22) Anmeldetag : **16.07.82**

(51) Int. Cl.⁴ : **F 16 L 47/02**

(54) Schweissmuffe.

(30) Priorität : **12.05.82 CH 2948/82**

(43) Veröffentlichungstag der Anmeldung :
**16.11.83 Patentblatt 83/46**

(45) Bekanntmachung des Hinweises auf die Patenterteilung : **06.05.87 Patentblatt 87/19**

(84) Benannte Vertragsstaaten :
**AT BE CH DE FR GB IT LI NL SE**

(56) Entgegenhaltungen :
**AT-B- 361 749**
**CH-A- 612 489**
**FR-A- 1 260 190**
**FR-A- 2 115 266**

(73) Patentinhaber : **Geberit AG**
**Schachenstrasse 77**
**CH-8645 Jona (CH)**

(72) Erfinder : **Keller, Hans**
**Inzlingerstrasse 274**
**CH-4125 Riehen (CH)**

(74) Vertreter : **White, William et al**
**PATENTANWALTS-BUREAU ISLER AG Postfach 6940**
**Walchestrasse 23**
**CH-8023 Zürich (CH)**

## Beschreibung

Schweissmuffen zum Verbinden von Rohren aus thermoplastischem Material mit eingelegtem Stromleiter, der mindestens teilsweise als Widerstandsheizdraht ausgebildet ist, sind bekannt. Solche Muffen bestehen üblicherweise aus dem gleichen Material wie die Rohre, auf die sie aufgeschweisst werden, sei es, dass sie als gewöhnliche Hülsen zur Herstellung einer dauernden Verbindung zwischen zwei Rohren ausgebildet sind, sei es, dass sie an der einen Seite mit einem Gewinde versehen und so als Fitting ausgebildet sind, um dasjenige Rohrende, an dem sie aufgeschweisst werden, mit einem Gewinde zu versehen. Zur Durchführung des Schweissvorganges werden speziell ausgebildete Steuergeräte benutzt, mit denen sich die an den Widerstandsheizdraht anzulegende Spannung und die benötigte Dauer des Heizvorganges einstellen lassen. Solche Geräte müssen nicht nur auf jeder Baustelle, an welcher Schweissmuffen verwendet werden, vorhanden sein, sondern üblicherweise braucht es auf Grossbaustellen, an denen mehrere Arbeiter mit dem Zusammensetzen von thermoplastischen Rohren beschäftigt sind, mehrere Geräte, und zwar auch dann, wenn die Geräte oft tagelang nicht benutzt werden. Es handelt sich also oft um grössere Investitionen, die mit dem bekannten Nachteil verbunden sind, dass die Geräte auf den Baustellen beschädigt werden, verloren gehen oder gar gestohlen werden. Da man am Gerät die zeitliche Dauer des für den Schweissvorgang nötigen Stromdurchganges und oft auch die dazu benötigte Spannung einstellen kann, besteht die Möglichkeit, diese Werte unrichtig einzustellen, was zu Fehlern in der Schweissverbindung führt.

Zur Vermeidung dieser Nachteile wurden bereits Einrichtungen am Muffenkörper geschaffen, mittels derer durch einfache Sichtkontrolle überprüft werden kann, ob die Verschweißung bereits erfolgt ist und ob die richtige Schweißtemperatur erreicht wurde oder nicht. Dies geschieht beispielsweise am Gegenstand der AT-B-361.749 mittels eines Fühlerstiftes, der nach vollständiger Verschweißung verformt wird und am Gegenstand der CH-A-612.489 durch einen auf der Muffe angeordneten Temperaturindikator. In beiden Fällen ist jedoch nach wie vor das vorstehend erwähnte Steuergerät nötig, um die voraussichtlich benötigte Dauer des Heizvorganges auf der Baustelle von Hand einzustellen.

Ferner ist durch die FR-A-1.260.490 eine Einrichtung zum Stumpfschweißen von Kunststoffteilen bekannt geworden, an der in einem ringförmigen Heizleiter eine Soll-Schmelzstelle vorgesehen ist. Der Heizleiter wird dort nicht über einen Stromleiter sondern über eine Induktionsspule erregt, so daß — wie beim vorstehend erläuterten Stand der Technik — für die Durchführung der Schweißung ein weiteres Gerät nötig ist.

Die sich hieraus ergebenden Nachteile lassen sich mit der erfindungsgemässen Schweissmuffe vermeiden, die dadurch gekennzeichnet ist, dass ihr Stromleiter einen Unterbrecher aufweist, der so dimensioniert ist, dass er die Stromleitung irreversibel unterbricht, wenn im Heizleiter die zum Verschweissen der Muffe nötige Energie umgesetzt worden ist. Es ist dabei nur darauf zu achten, dass der Fabrikant einen Hinweis auf die anzulegende Spannung anbringt, wobei in europäischen Verhältnissen üblicherweise 220 V~ zur Verwendung gelangen werden, weil diese Spannung an allen Baustellen vorhanden ist. Wenn als einziges Hilfsmittel ein zweiadriges Kabel mit einem Stecker für den 220 V~-Anschluss, einem Schnurschalter und einer an den Stromleiter der Schweissmuffe anschliessbaren Kupplungssteckdose vorhanden ist, sollten keinerlei Bedienungsfehler möglich sein, und die Investitionskosten und die Gefahr des Abhandenkommens sind wesentlich kleiner als bei der Benutzung der bisher nötigen Steuergeräte. Des weitern besteht auch nicht die Möglichkeit, durch ein erneutes Anschliessen an die Spannungsquelle die Schweissstelle zu lösen oder zu beschädigen.

Nachfolgend werden anhand einer Zeichnung Ausführungsbeispiele der Erfindung beschrieben. In der Zeichnung zeigt

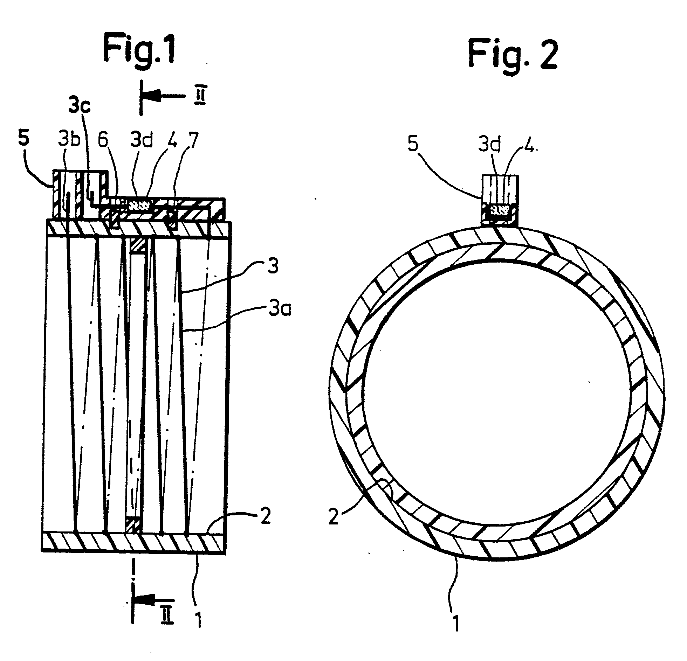

die Figur 1 einen Längsschnitt durch eine erfindungsgemässe Schweissmuffe und

die Figur 2 einen Querschnitt nach der Linie II-II der Figur 1

Mit 1 ist der zylindrische Muffenteil bezeichnet, in dessen Innenfläche 2 auf an sich bekannte Art und Weise die Windungen 3a des Widerstandsheizdrahtes 3 eingesetzt sind. Die beiden Enden dieses Drahtes sind mit 3b und 3c bezeichnet.

Zwischen dem einen Ende der Windungen 3a und dem Anschluss 3c ist als Unterbrecher, der die Stromleitung irreversibel unterbricht, eine Soll-Schmelzstelle 3d eingesetzt, die so dimensioniert ist, dass sie dann durchschmilzt, wenn im Heizleiter 3a die zum Verschweissen der Muffe 1 nötige Energie umgesetzt worden ist, was je nach Grösse der Muffe bei einer angelegten Spannung von 220 V~ 0,5-5 Min. oder unter Umständen auch noch länger dauern kann. Diese Soll-Schmelzstelle ist hier in einer Glasampulle 4 untergebracht. Sie könnte natürlich auch in einer vorzugsweise durchsichtigen Kunststoffhülse eingeschlossen sein. Es ist zweckdienlich, wenn die Schmelzstelle mindestens teilweise mit Material umgeben ist, das beim Durchschmelzen die Farbe irreversibel ändert. Dies kann auch dadurch bewirkt werden, dass die Soll-Schmelzstelle aus einem Material besteht, das sich beim Durchschmelzen an der Innenseite der Schutzhülse einen gut sichtbaren Niederschlag gibt. Auf diese Art und Weise ist es ohne weiteres möglich, festzustellen, ob der Schweissvorgang schon durchgeführt worden ist oder nicht.

Im gezeichneten Ausführungsbeispiel ist die durch die Ampulle 4 geschützte Soll-Schmelzstelle 3d in einer Halterung 5 untergebracht, die auch die beiden freien Leitungsenden 3b und 3c enthält und die hier mit dem übrigen Teil der Schweissmuffe nur durch zwei Kunststoffnieten 6 und 7 verbunden ist, so dass die ganze Halterung nach dem Schweissvorgang von der eingentlichen Muffe abgetrennt werden kann. Die Halterung 5 kann natürlich auch anderswie lösbar befestigt sein, beispielsweise kann sie so angeschweisst oder angeklebt sein, dass sich der Unterbrecher nach der Durchführung des Verschweissvorganges ohne grosse Mühe entfernen lässt. An Stelle einer vom Produkt Strom mal Zeit abhängigen Soll-Schlmezstelle, also einer mit Verzögerung ausprechenden Strom-Begrenzungssicherung, lässt sich als irreversibler Unterbrecher auch eine Thermosicherung verwenden, die so dimensioniert ist, dass sie den Stromleiter dann unterbricht, wenn das Schweissmuffeninnere die Temperatur erreicht hat, bei welcher sich seine Oberfläche mit der Oberfläche eines in die Muffe eingeschobenen Rohres verbindet. Solche Thermosicherungen, die eine hinreichende Präzision aufweisen, sind preswert erhältlich. Im Unterschied zur « Stromsicherung », die vorzugsweise gut sichtbar aussen auf der Schweissmuffe angebracht wird, wird man eine Thermosicherung eher so anordnen, dass sie sich in der Nähe der zu verschweissenden Fläche befindet und dann verhältnismässig rasch auf die dort auftretende Temperatur reagiert, wobei durch die richtige Anordnung die Abschaltung des Stromdurchganges gerade dann erreicht wird, wenn zur Verschweissung keine zusätzliche Energie mehr nötig ist, d. h. dann, wenn das Schweissmuffeninnere die Temperatur erreicht hat, bei welcher sich seine Oberfläche mit der Oberfläche eines in die Muffe eingeschobenen Rohres verbindet. Der Vorteil der Verwendung einer Thermosicherung gegenüber der Verwendung einer Stromsicherung besteht, abgesehen vom günstigeren Preis, darin, dass sie einigermassen unempfindlich gegenüber Strom- und Spannungsschwankungen ist.

**Patentansprüche**

1. Schweissmuffe zur Verbinden von Rohren aus thermoplastischem Material mit eingelegtem Stromleiter (3), der mindestens teilweise als Widerstandsheizdraht ausgebildet ist und zwei zum Stromanschluss dienende freie Enden (3b, 3c) aufweist, dadurch gekennzeichnet, dass ihr Stromleiter (3) einen Unterbrecher (3d) aufweist, der so dimensioniert ist, dass er die Stromleitung irreversibel unterbricht, wenn im Heizleiter (3a) die zum Verschweissen der Muffe nötige Energie umgesetzt worden ist.

2. Schweissmuffe nach Anspruch 1, dadurch gekennzeichnet, dass der Unterbrecher (3d) eine Thermosicherung enthält, die den Stromleiter (3) dann unterbricht, wenn das Schweissmuffen-Innere (2) die Temperatur erreicht hat, bei welcher sich seine Oberfläche mit der Oberfläche eines in die Muffe (1) eingeschobenen Rohres verbindet.

3. Schweissmuffe nach Anspruch 1, dadurch gekennzeichnet, dass der Unterbrecher (3d) eine Soll-Schmelzstelle aufweist, die so dimensioniert ist, dass sie dann durchschmilzt, wenn im Heizleiter (3a) die zum Verschweissen der Muffe (1) nötige Energie umgesetzt worden ist.

4. Schweissmuffe nach einem der Ansprüche 1-3, dadurch gekennzeichnet, dass der Unterbrecher (3d) so angeordnet ist, dass er von aussen sichtbar ist.

5. Schweissmuffe nach Anspruch 4, dadurch gekennzeichnet, dass der Unterbrecher (3d) in durchsichtigem Material (4) untergebracht ist.

6. Schweissmuffe nach einem der Ansprüche 1-5, dadurch gekennzeichnet, dass der Unterbrecher (3d) mindestens teilweise mit Material umgeben ist, das beim Unterbrechen der Leitung (3) die Farbe irreversibel ändert.

7. Schweissmuffe nach einem der Ansprüche 1-6, dadurch gekennzeichnet, dass der Unterbrecher (3d) in einer vom übrigen Teil der Schweissmuffe (1) lösbaren Kunststoffhalterung (5) untergebracht ist.

8. Schweissmuffe nach einem der Ansprüche 1-7, dadurch gekennzeichnet, dass der Unterbrecher (3d) zwischen einem als Stromanschluss dienenden Ende (3c) und dem als Widerstandsheizdraht dienenden Teil (3a) des Stromleiters angeordnet ist.

9. Schweissmuffe nach einem der Ansprüche 1-7, dadurch gekennzeichnet, dass der Unterbrecher (3d) beidseits an den Widerstandsheizdraht (3a) angeschlossen ist.

**Claims**

1. Weld socket for the connection of pipes of thermoplastic material with an embedded current conductor (3), which is constructed at least partially as resistance heater wire and displays two free ends (3b, 3c) serving for current connection, characterised thereby, that its current conductor (3) displays a breaker (3d), which is so dimensioned that it interrupts the current conduction irreversibly when the energy necessary for the welding together of the socket has been translated in the heating conductor (3a).

2. Weld socket according to claim 1, characterised thereby, that the breaker (3d) contains a thermal fuse (3d), which interrupts the current conductor (3) when the interior (2) of the weld socket has reached the temperature, at which its surface connects with the surface of a pipe pushed into the socket (1).

3. Weld socket according to claim1, characterised thereby, that the breaker (3d) displays an intended melting place which is so dimensioned that it melts through when the energy necessary for the welding together of the socket (1) has been translated in the heating conductor (3a).

4. Weld socket according to one of the claims 1 to 3, characterised thereby, that the breaker (3d) is so arranged that it is visible from outside.

0 093 821

5. Weld socket according to claim 4, characterised thereby, that the breaker (3d) is housed in transparent material.

6. Weld socket according to one of the claims 1 to 5, characterised thereby, that the breaker (3d) is at least partially surrounded by material which changes colour irreversibly on interruption of the conductor (3).

7. Weld socket according to one of the claims 1 to 6, characterised thereby, that the breaker (3d) is housed in a synthetic material mounting (5) detachable from the remaining part of the weld socket (1).

8. Weld socket according to one of the claims 1 to 7, characterised thereby, that the breaker (3d) is arranged between an end (3c) serving as current connection and that part (3a) of the current conductor, which serves as resistance heater wire.

9. Weld socket according to one of the claims 1 to 7, characterised thereby, that the breaker (3d) is connected at both sides to the resistance heater wire (3a).

**Revendications**

1. Manchon à souder pour abouter des tuyaux en matière thermoplastique, muni d'un conducteur de courant (3) qui y est incorporé et qui est agencé au moins partiellement en tant que fil de résistance chauffante et comprend deux extrémités libres (3b, 3c) servant à la connexion électrique, caractérisé en ce que son conducteur de courant (3) comporte un élément de coupure (3d) qui est dimensionné de manière à interrompre de manière irréversible la conduction de courant une fois que, dans le conducteur chauffant (3a), l'énergie nécessaire au soudage du manchon a été dégagée.

2. Manchon à souder selon la revendication 1, caractérisé en ce que l'élément de coupure (3d) contient un coupe-circuit thermique qui interrompt le conducteur de courant (3) lorsque l'intérieur (2) du manchon à souder a atteint la température pour laquelle sa surface se solidarise avec la surface d'un tuyau introduit dans le manchon (1).

3. Manchon à souder selon la revendication 2, caractérisé en ce que l'élément de coupure (3d) comprend un emplacement de fusion imposé qui est dimensionné de manière qu'il fonde complètement lorsque dans le conducteur chauffant (3a), l'énergie nécessaire au soudage du manchon (1) a été dégagée.

4. Manchon à souder selon l'une des revendications 1 à 3, caractérisé en ce que l'élément de coupure (3d) est disposé de manière qu'il soit visible de l'extérieur.

5. Manchon à souder selon la revendication 4, caractérisé en ce que l'élément de coupure (3d) est logé dans un matérieu transparent (4).

6. Manchon à souder selon l'une des revendications 1 à 5, caractérisé en ce que l'élément de coupure (3d) est entouré au moins partiellement d'un matériau qui change de couleur de manière irréversible lors de l'interruption de la conduction (3).

7. Manchon à souder selon l'une des revendications 1 à 6, caractérisé en ce que l'élément de coupure (3d) est logé dans un support en matière plastique (5) séparable de la partie restante du manchon à souder (1).

8. Manchon à souder selon l'une des revendications 1 à 7, caractérisé en ce que l'élément de coupure (3d) est disposé entre une extrémité (3c) du conducteur de courant, servant de connexion électrique, et la partie (3a) de ce conducteur qui sert de fil de résistance chauffante.

9. Manchon à souder selon l'une des revendications 1 à 7, caractérisé en ce que l'élément de coupure (3d) est raccordé des deux côtés au fil de résistance chauffante (3a).

# Fig.1

# Fig. 2